# EUROPEAN PATENT SPECIFICATION

(11) **EP 2 324 198 B1**
(45) Date of publication and mention of the grant of the patent: **17.02.2016**
(21) Application number: 09784821.2
(22) Date of filing: 30.07.2009
(51) Int. Cl.: E21B 47/12, G01V 11/00

(54) **DOWNHOLE COMMUNICATION**
DOWNHOLE-KOMMUNIKATION
COMMUNICATION EN PUITS DE FORAGE

(30) Priority: 01.08.2008 GB 0814095
(43) Date of publication of application: 25.05.2011
(73) Proprietor: Saber Limited, Aberdeen AB10 1HA (GB)
(72) Inventor: LOUDEN, Andrew, Aberdeen AB24 1RQ (GB)
(74) Representative: Shanks, Andrew
(86) International application number: PCT/GB2009/001872
(87) International publication number: WO 2010/013004

(56) References cited:
- EP-A2- 1 933 175
- EP-B1- 0 047 704
- WO-A1-2005/116388
- US-A1- 2004 051 650
- US-A1- 2004 262 008

## Description

### FIELD OF THE INVENTION

The present invention relates to communication between one or more downhole tools and a controller via a reelable support.

### BACKGROUND OF THE INVENTION

In industries in which holes or bores are drilled in the earth, such as the oil and gas industry, it is well known to run tools and devices into a bore on a reelable support such a slickline, wireline or coiled tubing. The tool may take the form of a surface powered sensor, and there may be real time communication between the sensor and a signal processor on surface. Alternatively, the tool may be self-contained and the tool may, for example, include a power supply, a memory device and/or have data recording capability.

US Patent No 4,137,762 discloses various forms of wireline, including one form in which a fibre optic "conductor" is provided within a slick metal sheath, without any conventional metal conductors being present in the wireline. The slick wireline serves to transmit signals between a downhole tool and aboveground equipment.

European Patent Application EP 0047704 describes use of logging cables with fibre optic signal conductors, with the optic source and detector at the surface being mounted in, and rotating with, the winch drum. Electrical signals communicate between a non-rotating control/processing unit and the optic source and detector on the winch drum.

US Patent No 7,140,435 and UK Patent GB 2 392 462 B describe uses of a slickline including a fibre optic line but with no electrical conductor.

A manufacturing method for a support as described in these documents, having a slick metal sheath and containing one or more optical fibres, is described in US Patent No 4,852,790.

US 2004/0262008 describes a subsea communications module including an interface to communicate with a surface facility over a communications link using a packet-based protocol. The communications link can be implemented with a fiber optic line, wire-based line, and/or other types of communications lines.

### SUMMARY OF THE INVENTION

According to a first aspect of the present invention there is provided a method according to claim 1.

According to a second aspect of the present invention there is provided a downhole system according to claim 5.

The surface controller may encompass any control unit, processing unit or processor. For example, the surface controller may send or receive and process measurement information or other data sent to or from the tools via the optical fibre. Alternatively, or in addition, the surface controller may control one or more of the operations of the tools and/or the winch associated with the reelable support.

In particular embodiments, the surface controller may also be assigned a unique address and the unique addresses assigned to the tools and/or the surface controller may be transferred with the data.

The provision of unique addresses for one or more of the tools and surface controller facilitates provision of "off-the-shelf" systems for running, monitoring and/or controlling downhole tools on a support such as a slick or braided wireline incorporating at least one optical fibre.

This contrasts with existing systems in which a slickline winch/drum is typically only used for the deployment of a solid steel or alloy wire "reelable support" on which mechanical tools are attached.

The router may comprise any suitable tool, including for example, but not exclusively, a repeater, a switch, a router or computer.

The method may comprise communicating the data in real time.

Existing systems for running tools which communicate to surface in real time are typically bespoke systems which cannot be easily adapted to accommodate alternative tools. Of course, memory tools, in which data is stored in a memory device in the tool, may be run on any form of support, but suffer from many disadvantages compared to tools providing real time communication.

The unique addresses may be assigned at any suitable time. For example, a supplier may provide customers with complete systems, including tools and controllers, the tools, the routers and the controllers being provided with pre-assigned addresses. Alternatively, the supplier may provide a customer with elements of the system, for example the router, the reelable support and the controller. The controller may be provided with an internal database including predetermined addresses for a range of known tools likely to be used by the customer, and the appropriate address may be assigned to the tools when the system is first set up in the field. If appropriate for the system, only the tools may be assigned an address. The same models of tools or controllers may be assigned the same address, or individual tools or controllers may be assigned unique addresses.

The addresses may be Internet Protocol (IP) addresses, and the system may include a secure downhole IP network.

The tools may be run into the bore on the reelable support, which may comprise a slickline or other suitable support. The provision of multiple tools with individual addresses facilitates running and communicating with the tools on a single support, and facilitates communication between the controller and the tools via a single communication link, for example a single fibre optic conductor.

The tools may be coupled with the optical fibre in parallel or in series. The tools may be physically coupled or connected by an appropriate signal carrying member, or may communicate using a wireless system, for example electromagnetically, acoustically or by a radio frequency protocol such as Bluetooth. The signal carrying member may permit data to be transferred to the tool configured to function as a router and bypass the at least one other tool. The signal carrying member may permit data to be transferred to the tool configured to function as a router wirelessly and bypass the at least one other tool. Alternatively, the signal carrying member may comprise a cable for transferring data to the tool configured to function as a router and bypass the at least one other tool. In particular embodiments, the signal carrying member may comprise a telemetry crossover.

The router may receive data from one or more of the other tools and pass this data to another tool and/or process the data. This may be done without communicating to surface.

The communication between each of the tools and the controller may be one-way, but is preferably bi-directional. For example, the tool may be a sensor which is dormant until activated by an appropriate signal from the controller. The sensor may then collect and transfer data to the controller. The contrbller may subsequently deactivate the sensor.

The controller is located on surface, which may be subsea, on or adjacent to the winch drum for the reelable support. Alternatively, at least part of the controller may be remotely located. The controller may include a plurality of separate elements and an element of the controller may, for example, be provided on a slickline or wireline rig or truck, providing the rig operator with access to information derived from the tool. In addition, the same or different information may be transmitted to a remote element of the controller. For example, the system or elements of the system may be rented from a supplier, and the supplier may monitor the use of the tool remotely, to ensure that, for example, the tool is serviced at appropriate intervals, or to provide remote diagnostics for the optical fibre or the tool.

The communication between the tools and the controller may be solely via optical fibre, but may be via additional media, for example electrical signals, wireless signals or the like. Appropriate routers or converters may be provided between the different communication media. Typically, one or more of the tools will create electrical signals which are converted to optical signals at a router, optical crossover, electro-optical transceiver or electro-optical media converter for transmission to surface though the optical fibre. Communication between the tools and the converter may be via a hard link, or may be via a wireless link, which simplifies making up a combination tool string from more than one supplier. As noted above, at present conventional downhole tools adapted for mounting on reelable supports tend to create electrical signals, however the use of tools which transmit or receive data in an optical format is within the scope of the present invention.

The use of a reelable support will typically require communication of data between the winch-mounted rotateable reel, such as a slickline or wireline reel, and a non-rotateable controller element. This may be achieved by means of an appropriate slip ring, but is preferably achieved by means of a non-contact communication, such as wireless communication. An appropriate converter and transmitter element of the controller may be provided on the rotateable reel, and an appropriate receiver provided in association with the non-rotating element of the controller. In one embodiment, the surface controller may include a number of elements including a computer mounted inside the winch drum with a wireless link to an adjacent wireless router which can then be interrogated with a computer, such as a laptop computer. The computer or laptop may be hard wired to the router or may communicate with the router wirelessly.

At least one of the tools and the surface controller may comprise a power source and is at least partly self-powered, that is the power supply is not provided with a power supply from surface, or each tool may include an appropriate power source, such as a battery or a source of chemical energy, or may include a power generator using ambient energy, for example a turbine which generates electricity from fluid flowing through the bore, a generator which uses ambient pressure or heat, or a generator which utilises chemical reaction or other interaction with ambient fluids.

In particular embodiments, the surface controller and the router may be battery powered. The reelable support may also comprise a power source, such as a battery.

The provision of a power source, such as battery power, assists in acquiring and delivering data whilst deploying and/or retrieving the reelable support. This contrasts with existing systems, such as for distributed measurements, where data is not transmitted until the support has been deployed and is stationary.

Alternatively, or in addition, power may be supplied from surface. For example, electrical power may be supplied via electrical cabling, or optical power may be supplied via the optical fibre, or an alternative source such as vibration or heat energy may be utilised. Alternatively, a wireless power supply may be utilised.

The tools may take any appropriate form, and may be a sensor, or a completion or intervention tool. The tools may be operated in combination. For example, a sensor may be utilised to facilitate accurate location of the tools in a bore relative to a profile. Another tool may then be activated from surface to extend a dog, anchoring device or other member to engage the profile and lock the tools in position.

Although the invention is described primarily with reference to downhole applications, those of skill in the art will recognise that the system may also be utilised in pipelines, risers and the like.

Many of the features described above have utility independently of the aspects described above and may themselves form alternative aspects of the present invention.

According to a further aspect of the present invention there is provided a method of communicating with a downhole tool, the method comprising:
assigning an IP address to a downhole tool;
mounting the tool on a support and locating the tool in a bore; and
transferring data containing the address between the tool and a downhole router and a surface controller.

According to a still further aspect of the present invention there is provided a downhole system comprising:
a downhole tool adapted to be assigned an IP address;
a tool controller; a transmitter associated with one of the tool and the controller; and
a receiver associated with the other of the tool and the controller, whereby data may be transferred between the tool and the controller.

It will also be understood that the system according to any one of the aspects of the present invention may comprise a modular system and that elements of the invention may be provided or supplied separately or in sub-assemblies comprising two or more of the parts of the system.

### BRIEF DESCRIPTION OF THE DRAWING

These and other aspects of the present invention will now be described, by way of example only, with reference to the accompanying drawings, in which:
Figure 1 is a schematic representation of a downhole communication system in accordance with an embodiment of the present invention;
Figure 2 is a diagrammatic representation of a downhole tool in accordance with an embodiment of the present invention;
Figure 3 is an enlarged view of a media converter/IP router of the tool of Figure 2;
Figure 4 is an enlarged view of a telemetry crossover of the tool of Figure 2; and
Figure 5 is a diagrammatic representation of a downhole tool in accordance with an alternative embodiment of the present invention.

### DETAILED DESCRIPTION OF THE DRAWING

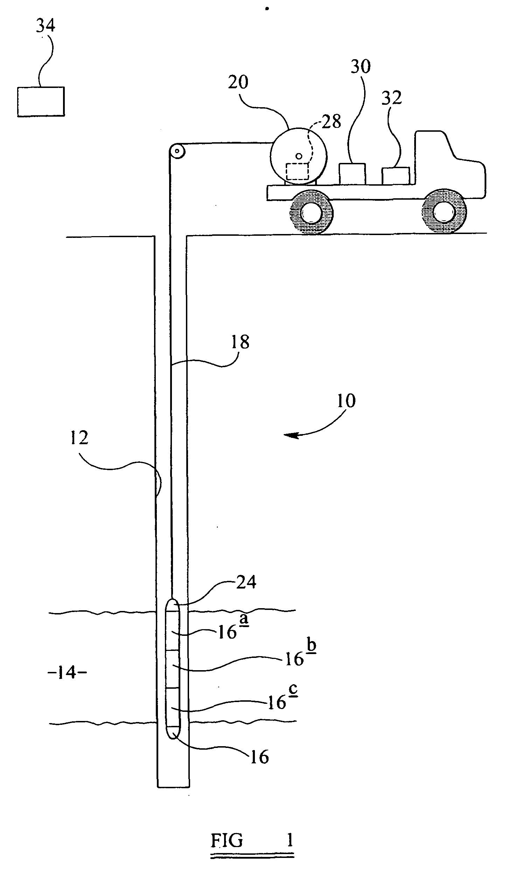

Figure 1 illustrates a system 10 in accordance with an embodiment of the invention. A bore 12 has been drilled to access a subsurface formation 14 and a tool 16 is being utilised to, among other things, obtain information on the formation 14. The tool 16 is suspended on a reelable support 18 comprising at least one fibre optic conductor encased within a slick sheath. The upper end of the support 18 is coiled around a winch drum 20. As will be described, the tool 16 communicates with a surface controller via the fibre optic conductor.

The tool 16 comprises a number of self-powered units 16a, 16b, and 16c. The units may take different forms and, for example, measure different parameters of the formation 14, capture fluid samples, or function as intervention units, for example a running or retrieval tool with an isolation plug. The units 16a, 16b, 16c may be in wired or wireless communication with a media converter and IP router which transmits and receives signals to and from the units 16a, 16b, 16c. In the embodiment shown, the router comprises an electro optical media converter and IP router 24 and comprises a cable head tool with data transmission and processing capabilities.

The units 16a, 16b and 16c are each assigned a unique IP address and the data transmitted and received includes the respective address, and also IP addresses for the router 24 and a surface controller, as described below.

Optical signals corresponding to data generated by the units 16a, 16b and 16c are transmitted from the router 24 through the fibre optic conductor to surface.

In this embodiment, the surface controller includes a number of separate elements, including an optical transceiver and computer 28 mounted within the winch drum 20, the computer 28 being in wireless communication with an adjacent wireless router 30, which router 30 is interrogated by a wireless computer 32, such as a laptop computer. Thus, the optical signals are converted and processed by the computer 28, and may then be analysed by an operator using the computer 32. Further, data may also be transmitted to and received from a remote location, for example a control centre 34.

The operator may assign secure control of the individual units 16a, 16b and 16c using the computer 32 to other wireless computers operated by the tool owners.

A principal advantage of this embodiment of the present invention is that the multiple tool units 16a-c are assigned unique IP addresses and can operate and communicate independently of one another, via a common communication media, with a single surface controller. The tool units may be replaced and supplemented with other units as desired by the operator, providing greatly enhanced flexibility.

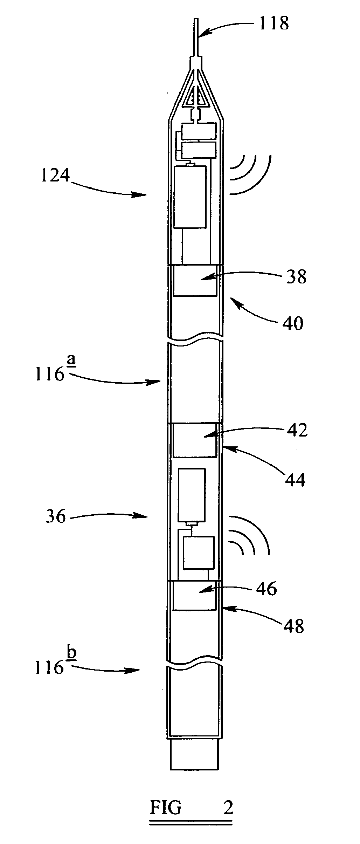

Figure 2 shows a tool 116 according to an embodiment of the present invention and the tool 116 may, for example, be used in a downhole system such as the system 10 shown in Figure 1. Like components between Figure 1 and Figure 2 are indicated by like reference numerals incremented by 100.

The tool 116 comprises two units 116a, 116b in communication with a battery powered electro-optical media converter/IP router/cable head 124. While two units 116a, 116b are shown in Figure 2, it will be readily understood that any number of units 116a, 116b,...116n may be provided. A telemetry crossover 36 is provided between the tools 116a, 116b and, in use, the crossover 36 permits independent and secure communication between each tool 116a, 116b, and the media converter/IP router 124 using wireless means.

The media converter/IP router 124 comprises a pin connector 38 for engaging with a corresponding box connector 40 coupled to, or formed in, the first unit 116a. In a similar manner, a distal end of the first unit 116a comprises a pin connector 42 for engaging with a corresponding box connector 44 coupled to, or formed in, the telemetry crossover 36. A distal end of the telemetry crossover 36 has a pin connector 46 for engaging with a corresponding box connector 48 coupled to, or formed in, the second unit 116b. While the embodiment shown in Figure 2 shows box and pin connections, it should be recognised that any suitable connection may be used as appropriate, including quick connect couplings and the like. The connectors 38 and 46 can be used to transfer data and/or power to or from the adjacent elements/tools. Although the figures and description detail box and pin connectors, those of skill in the art will recognise that the means by which the tools are connected may take various forms and the tools may be connected within a single tool body.

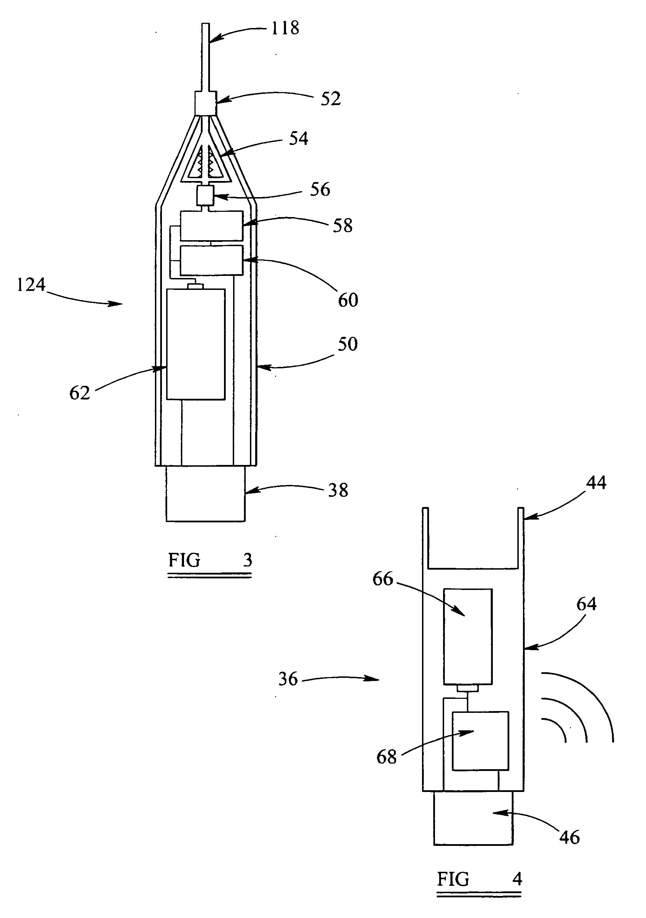

An enlarged view of the electro-optical media converter/ IP router/cable head 124 is shown in Figure 3. In use, the media converter/IP router 124 transmits and receives signals to and from the units 116a, 116b. As shown in Figure 3, the media converter/IP router 124 has a housing 50 and a hydraulic cable seal 52 is provided on an upper end of the housing 50, the reelable support 118 extending through the seal 52 into the housing 50. The distal end of the reelable support 118 (that is, the end of the reelable support 118 furthest from the controller) is coupled to the housing 50 via an anchoring device 54 and a telemetry connector 56. The telemetry connector 56 is coupled to a signal modulator 58 which in turn is coupled to a router 60. In the embodiment shown, the router 60 comprises a computer, though other repeaters/switches/routers, including wireless capable types may be used. Each of the signal modulator 58 and the router 60 are coupled to a power source 62, such as a battery power source, and the power source provides electrical power to the components of the media converter/IP router 124.

In use, each of the units 116a, 116b communicates with the media converter/ IP router 124. The unit 116a may communicate directly with the media converter/ IP router 124 via the pin 38 and box 40 connection. The unit 116b communicates wirelessly with the media converter/ IP router 124 via the telemetry crossover 36. In the embodiment shown, the unit 116b is coupled to the crossover 36 by the pin 46 and box 48 connection and the crossover 36 communicates wirelessly with the media converter/ IP router 124.

An enlarged view of the telemetry crossover 36 is shown in Figure 4. The telemetry crossover 36 comprises a housing 64 having a power supply in the form of battery 66 coupled to a data receiver/transmitter 68 for receiving signals from the unit 116b and transmitting these signals wirelessly to the media converter/ IP router 124.

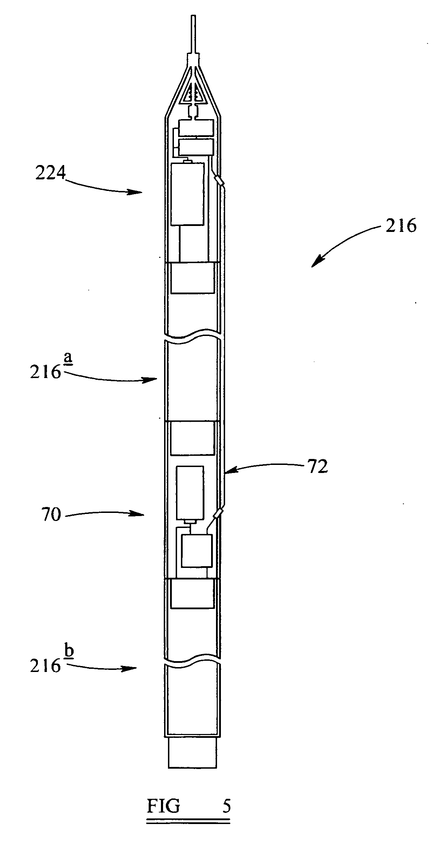

Figure 5 shows a tool 216 according to an alternative embodiment of the present invention and the tool 216 may, for example, be used in a downhole system such as the system 10 shown in Figure 1. For convenience, like components between Figure 1 and Figure 5 are indicated by like reference numerals incremented by 200.

The tool 216 comprises two units 216a, 216b in communication with an electro-optical media converter/IP router 224. A telemetry crossover 70 is provided between the units 216a, 216b and, in use, the crossover 70 permits independent and secure communication between each unit 216a, 216b, and the media converter/IP router 224. As shown in Figure 5, the media converter/IP router 224 is similar to the media converter/IP router 124 but rather than communicating wirelessly, the media converter/IP router 224 communicates with the crossover 70 via a bypass conduit or wire 72 extending down the outside of the tool 216a. As with the tool 116b, the bypass conduit 72 permits communication between the second unit 216b and the media converter/IP router 224 without impinging on the first unit 216a.

It should be understood that the embodiment described herein is merely exemplary and that various modifications may be made thereto without departing from the scope of the invention.

For example, while in preferred embodiments an optical fibre is used, it is envisaged that any suitable data conductor may be used, where appropriate.

While communication between one or more of the tools and the controller may be one-way, for example in relatively simple systems, in particular embodiments of the invention communication between the tool and the controller will be bi-directional.

Furthermore, while the transmission medium discussed above is optical, it will be understood that any suitable medium such as an electrical conductor may be used.

One or more of the media converter/ IP router 124, the telemetry crossover 36 and the units 116a, 116b may be self-powered, for example, the media converter/ IP router 124 and the telemetry crossover may have onboard power supply in the form of batteries. Alternatively, one or more of the media converter/ IP router 124, the telemetry crossover and the units 116a, 116b may be powered by an external power source. For example, the units 116a, 116b may be powered from surface or by the power supply of the media converter/ IP router 124 or the telemetry crossover.

## Claims

1. A method of communicating with a downhole tool, the method comprising:
assigning unique addresses to a plurality of downhole tools (16, 24, 116, 124, 216, 224), at least one of the tools (16, 24, 116, 124, 216, 224) configured to function as a router (24, 124, 224);
mounting the tools (16, 24, 116, 124, 216, 224) on a reelable support (18, 118) including an optical fibre and locating the tools (16, 24, 116, 124, 216, 224) in a bore (12);
mounting a surface controller (28) on a winch (20) associated with the reelable support (18, 118); and
transferring data between at least one of the tools (16, 116, 216) and the surface controller (28) via the router (24, 124, 224) and the optical fibre during operation of the winch (20).

2. The method of claim 1, comprising at least one of:
controlling at least one of the tool (16, 116, 216) and the winch (20) with the surface controller (28);
assigning the surface controller (28) a unique address;
transferring the unique addresses with the data;
communicating the data in real time;
pre-assigning at least one of the unique addresses or assigning at least one of the unique addresses when the system (10) is set up.

3. The method of claim 1 or 2, wherein at least one of:
the unique address is an Internet Protocol (IP) address;
the method comprises configuring the surface controller (28) to provide for secure data communication with at least one of the tools (16, 116, 216);
the method comprises configuring the surface controller (28) to provide for secure onward data communication from the surface controller (28) to the tool proprietor;
the method comprises running the tools (16, 24, 116, 124, 216, 224) into the bore (12) on the reelable support (18, 118);
the reelable support (18, 118) comprises a slickline;
the winch (20) comprises a slickline winch and the method comprises mounting the surface controller (28) on the winch drum (20);
the method comprises transferring data only via the optical fibre ;
the tool configured to function as a router (24, 124, 224) transfers data to the at least one other tool (16, 116, 216) without communicating to surface;
the tool configured to function as a router (24, 124, 224) processes the data;
at least one of the tools (16, 116, 216) and the surface controller (28) is at least partly self-powered; and
the method comprises transferring data while the tools (16, 24, 116, 124, 216, 224) are stationary.

4. The method of any preceding claim, wherein at least one of:
the method comprises connecting the tools (16, 24, 116, 124, 216, 224) via a signal carrying member;
the signal carrying member comprises a telemetry crossover (36, 70);
the signal carrying member permits data to be transferred to the tool configured to function as a router (24, 124, 224) and bypass the at least one other tool (16, 116,216);
the signal carrying member permits data to be transferred to the tool configured to function as a router (24, 124, 224) wirelessly and bypass the at least one other tool (16, 116, 216), or the signal carrying member comprises a cable for transferring data to the tool configured to function as a router (24, 124, 224) and bypass the at least one other tool (16, 116, 216).

5. A downhole system (10) comprising:
a plurality of downhole tools (16a, 16b, 16c, 24, 116a, 116b, 124, 216a, 216b, 224) adapted to be assigned unique addresses, at least one of the tools (24, 124, 224) configurable to function as a router;
a reelable support (18, 118) including an optical fibre;
a surface controller (28) mountable on a winch (20) associated with the reelable support (18, 118);
a transmitter (68) associated with one of the tools (16a, 16b, 16c, 24, 116a, 116b, 124, 216a, 216b, 224) and the surface controller (28); and
a receiver associated with the other of the tools (16a, 16b, 16c, 24, 116a, 116b, 124, 216a, 216b, 224) and the surface controller (28), whereby data may be transferred between at least one of the tools (16a, 16b, 16c, 24, 116a, 116b, 124, 216a, 216b, 224) and the surface controller (28) via the router (24, 124, 224) and the optical fibre during operation of the winch (20).

6. The system of claim 5, wherein at least one of:
the data is transferred via the tool configurable to function as a router (24, 124, 224) and the optical fibre;
at least one of the tools (16a, 16b, 16c, 24, 116a, 116b, 124, 216a, 216b, 224) and the surface controller (28) comprises a power source and is at least partly self-powered;
the reelable support (18, 118) comprises a slickline;
the winch (20) comprises a slickline winch and the surface controller (28) is adapted to be mounted on the winch drum (20);
the surface controller (28) is configurable to send and/or receive the data and process the data sent to or from the tools (16a, 16b, 16c, 24, 116a, 116b, 124, 216a, 216b, 224) via the optical fibre (72);
the surface controller (28) is configurable to control operation of at least one of the tools (16a, 16b, 16c, 24, 116a, 116b, 124, 216a, 216b, 224) and the winch (20) associated with the reelable support (18, 118);
the surface controller (28) is adapted to be assigned a unique address;
the unique addresses comprise Internet Protocol addresses;
the system comprises a secure downhole Internet Protocol (IP) network;
the tools (16a, 16b, 16c, 24, 116a, 116b, 124, 216a, 216b, 224) are adapted to be coupled to the optical fibre in parallel or
in series;
the tools (16a, 16b, 16c, 24, 116a, 116b, 124, 216a, 216b, 224) are adapted to be mounted on the reelable support (18, 118);
the tools (16a, 16b, 16c, 24, 116a, 116b, 124, 216a, 216b, 224) are physically coupled;
the system (10) is configurable so that communication between the tool (16a, 16b, 16c, 24, 116a, 116b, 124, 216a, 216b, 224) and the controller (28) is one-way or
bi-directional;
the data communication between the tools (16a, 16b, 16c, 24, 116a, 116b, 124, 216a, 216b, 224) and the controller (28) is solely via the optical fibre;
the tools (16a, 16b, 16c, 24, 116a, 116b, 124, 216a, 216b, 224) are configurable to transmit and/or receive optical data;
the downhole router (124) comprises an anchoring device (54) for securing the reelable support;
the tool configurable to function as a router (124) comprises a telemetry connector (56);
the tool configurable to function as a router (124) comprises a signal modulator (58);
the tool configurable to function as a router (124) comprises a repeater/switch/router (60);
the tool configurable to function as a router (124) comprises a power source (62).

7. The system of any one of claims 5 or 6, wherein at least one of:
the system further comprises a signal carrying member for connecting the tools (16, 24, 116, 124, 216, 224);
the signal-carrying member comprises a telemetry crossover (36, 70);
the signal carrying member further comprises a power source (62);
the signal carrying member comprises at least one of a transmitter (68) and a receiver (68) to permit wireless transmission of the data to the tool adapted to function as a router (24, 124, 224) and bypass the at least one other tool (16, 116, 216);
wherein the signal carrying member comprises a cable for transferring data to the tool adapted to function as a router (24, 124, 224) and bypass the at least one other tool (16, 116, 216).

8. The system of any one of claims 5 to 7, wherein the communication between the tools (16, 24, 116, 124, 216, 224) and the controller (28) is partly via the optical fibre and partly via an additional media;
and optionally wherein at least one of:
the additional media comprises electrical signals;
the additional media comprises wireless signals.

9. The system of any one of claims 5 to 8, further comprising an electro-optical converter (124, 224) for converting electrical signals from the tools (116, 124, 216, 224) into optical signals for transmission to surface through the optical fibre, and optionally wherein at least one of:
when dependent on claims 7 or 8, the system (10) is configurable so that the data communication between the tools (116, 124, 216, 224) and the electro-optical converter (124, 224) is transferred via the signal carrying member;
the communication between the tools (116, 124, 216, 224) and the electro-optical converter (124, 224) is via a hard link, or wherein the system (10) is configurable so that the data communication between the tools (124, 224) and the electro-optical converter (124, 224) is via a wireless link.

10. The system of any one of claims 5 to 9, wherein the controller (28) comprises a plurality of separate elements, and optionally wherein at least one of:
at least one of the surface controller (28) elements is remotely located; and
at least one of the surface controller (28) elements is provided on a rig or truck.

11. The system of any one of claims 5 to 10, wherein the surface controller (28) comprises at least one non-rotateable element for providing data communication between a rotatable reel and the reelable support (18, 118), and optionally at least one of:
the non-rotateable element comprises a slip ring; communication between the rotateable reel and the reelable support (18, 118) is provided wirelessly;
the controller further comprises converter and transmitter elements (68) provided in association with the rotateable reel and a receiver provided in association with the non-rotating element of the controller.

12. The system of any one of claims 5 to 11, wherein the surface controller comprises a computer (28) mounted inside the winch drum (20), and optionally wherein at least one of:
the surface controller computer (28) is wirelessly linked to a router (30) in communication with a computer (32); and
the computer (32) and the router (30) are hard wired.

13. The system of any one of claims 6 to 12, wherein at least one of:
the power source (62) comprises a battery (66);
the power source (62) comprises a turbine configurable to generate electricity from fluid flowing through the bore (12);
the power source comprises a generator adapted to use at least one of ambient pressure, heat, and a chemical reaction with ambient fluids to produce electricity.

14. The system of any one of claims 5 to 13, wherein at least one of the tools (16, 24, 116, 124, 216, 224) is at least partly powered from surface,
and optionally further comprising electrical power cabling for providing power to the tool (16, 24, 116, 124, 216, 224).

15. The system of any one of claims 5 to 14, wherein at least one of:
the optical power is supplied via the optical fibre;
the power is supplied by vibrational energy;
the system further comprises a wireless power supply;
the tool comprises a completion tool;
the tool comprises an intervention tool.

## Patentansprüche

1. Verfahren zur Kommunikation mit einem Downhole-Werkzeug, wobei das Verfahren Folgendes umfasst:
Zuweisen von eindeutigen Adressen an eine Mehrzahl von Downhole-Werkzeugen (16, 24, 116, 124, 216, 224), wobei zumindest eines der Werkzeuge (16, 24, 116, 124, 216, 224) dafür konfiguriert ist, als Router (24, 124, 224) zu arbeiten;
Einbauen der Werkzeuge (16, 24, 116, 124, 216, 224) auf einen trommelbaren Träger (18, 118), der eine optische Faser umfasst und Anordnung der Werkzeuge (16, 24, 116, 124, 216, 224) in einen Bohrloch (12);
Einbauen eines oberirdischen Kontrollers (28) auf einer dem trommelbaren Träger (18, 118) zugeordneten Winde (20); und
Übertragen von Daten zwischen zumindest einem der Werkzeuge (16, 116, 216) und dem oberirdischen Kontroller (28) mittels des Routers (24, 124, 224) und der optischen Faser während des Betriebs der Winde (20).

2. Verfahren nach Anspruch 1, umfassend zumindest eines der folgenden:
Steuern zumindest eines der Werkzeuge (16, 116, 216) und der Winde (20) mittels des oberirdischen Kontrollers (28);
Zuweisen einer eindeutigen Adresse an den oberirdischen Kontroller (28);
Übertragen der eindeutigen Adressen zusammen mit den Daten;
Echtzeitaustausch von Daten;
Vorzuweisung zumindest einer der eindeutigen Adressen oder Zuweisung zumindest einer der eindeutigen Adressen wenn das System (10) eingestellt ist.

3. Verfahren nach Anspruch 1 oder 2, wobei zumindest eines der Folgenden gilt:
die eindeutige Adresse eine Internet Protocol (IP) Adresse ist;
das Verfahren das Konfigurieren des oberirdischen Kontrollers (28) umfasst, um eine sichere Datenkommunikation mit zumindest einem der Werkzeuge (16, 116, 216) bereitzustellen;
das Verfahren das Konfigurieren des oberirdischen Kontrollers (28) umfasst, um eine sichere Weiterleitung der Daten vom oberirdischen Kontroller (28) zum Werkzeuginhaber bereitzustellen;
das Verfahren das Bewegen der Werkzeuge (16, 24, 116, 124, 216, 224) in dem Bohrloch (12) auf dem trommelbaren Träger (18, 118) umfasst;
der trommelbare Träger (18, 118) eine Mörtelleitung umfasst;
die Winde (20) eine Mörtelleitungswinde umfasst und das Verfahren das Einbauen des oberirdischen Kontrollers (28) auf der Windetrommel (20) umfasst;
das Verfahren die Datenübertragung ausschließlich durch optische Fasern umfasst;
das als Router (24, 124, 224) konfigurierte Werkzeug Daten an das zumindest eine weitere Werkzeug (16, 116, 216) überträgt, ohne mit der Oberfläche zu kommunizieren;
das als Router (24, 124, 224) konfigurierte Werkzeug die Daten bearbeitet;
zumindest eines der Werkzeuge (16, 116, 216) und der oberirdische Kontroller (28) zumindest teilweise selbstangetrieben sind; und
das Verfahren die Datenübertragung bei stationären Werkzeugen (16, 24, 116, 124, 216, 224) umfasst.

4. Verfahren nach einem der vorgehenden Ansprüche, wobei zumindest eines der Folgenden gilt:
das Verfahren die Verbindung der Werkzeuge (16, 24, 116, 124, 216, 224) mittels eines Signalübertragungsglieds umfasst;
das Signalübertragungsglied ein Telemetrie Crossover (36, 70) umfasst;
das Signalübertragungsglied die übertragung von Daten zum als Router (24, 124, 224) konfigurierten Werkzeug erlaubt und das zumindest eine weitere Werkzeug (16, 116, 216) umgeht;
das Signalübertragungsglied die drahtlose übertragung von Daten zum als Router (24, 124, 224) konfigurierten Werkzeug erlaubt und das zumindest eine weitere Werkzeug (16, 116, 216) umgeht, oder das Signalübertragungsglied ein Kabel zur übertragung von Daten an das als Router (24, 124, 224) konfigurierte Werkzeug umfasst und das zumindest eine weitere Werkzeug (16, 116, 216) umgeht.

5. Downhole-System (10) umfassend:
eine Mehrzahl von Downhole-Werkzeugen (16a, 16b, 16c, 24, 116a, 116b, 124, 216a, 216b, 224), die dafür konfiguriert sind, eine eindeutige Adresse zugewiesen zu bekommen, wobei zumindest eines der Werkzeuge (24, 124, 224) als Router konfigurierbar ist;
einen trommelbaren eine optische Faser umfassenden Träger (18, 118);
einen oberirdischen auf einer dem trommelbaren Träger (18, 118) zugeordneten Winde (20) einbaubaren Kontroller (28);
einen einem der Werkzeuge (16a,16b, 16c, 24, 116a, 116b, 124, 216a, 216b, 224) und dem oberirdischen Kontroller (28) zugeordneten Sender (68); und
einen den anderen Werkzeugen (16a,16b, 16c, 24, 116a, 116b, 124, 216a, 216b, 224) und dem oberirdischen Kontroller (28) zugeordneten Empfänger, sodass Daten zwischen zumindest einem der Werkzeuge (16a,16b, 16c, 24, 116a, 116b, 124, 216a, 216b, 224) und dem oberirdischen Kontroller (28) durch den Router (24, 124, 224) und die optische Faser während des Betriebs der Winde (20) übertragen werden können.

6. System nach Anspruch 5, wobei zumindest eines der Folgenden gilt:
Daten mittels dem als Router (24, 124, 224) konfigurierbaren Werkzeug und der optischen Faser übertragen werden;
zumindest eines der Werkzeuge (16a,16b, 16c, 24, 116a, 116b, 124, 216a, 216b, 224) und der oberirdische Kontroller (28) eine Energiequelle umfasst, und zumindest teilweise selbstangetrieben ist;
der trommelbare Träger (18, 118) eine Mörtelleitung umfasst;
die Winde (20) eine Mörtelleitungswinde umfasst, und der oberirdische Kontroller (28) zum Einbau an der Windetrommel (20) eingerichtet ist;
der oberirdische Kontroller (28) dafür konfigurierbar ist, die Daten zu senden und/oder empfangen und die an oder von den Werkzeugen (16a,16b, 16c, 24, 116a, 116b, 124, 216a, 216b, 224) mittels der optischen Faser (72) übertragenen Daten zu bearbeiten;
der oberirdische Kontroller (28) dafür konfigurierbar ist, den Betrieb von zumindest einem der Werkzeuge (16a,16b, 16c, 24, 116a, 116b, 124, 216a, 216b, 224) und der dem trommelbaren Träger (18, 118) zugeordneten Winde (20) zu steuern;
der oberirdischen Kontroller (28) dazu eingerichtet ist, eine eindeutige Adresse zugeteilt zu bekommen;
die eindeutige Adresse Internet Protocol Adressen umfasst;
das System ein sicheres Downhole Internet Protocol (IP)-Netzwerk umfasst;
die Werkzeuge (16a,16b, 16c, 24, 116a, 116b, 124, 216a, 216b, 224) zum parallelen oder seriellen Verbinden mit der optischen Faser eingerichtet sind;
die Werkzeuge (16a,16b, 16c, 24, 116a, 116b, 124, 216a, 216b, 224) zum Einbau auf dem trommelbaren Träger (18, 118) eingerichtet sind;
die Werkzeuge (16a,16b, 16c, 24, 116a, 116b, 124, 216a, 216b, 224) materiell verbunden sind;
das System (10) so konfigurierbar ist, dass die Kommunikation zwischen den Werkzeugen (16a,16b, 16c, 24, 116a, 116b, 124, 216a, 216b, 224) und dem Kontroller (28) unidirektional oder bidirektional ist;
die Datenkommunikation zwischen den Werkzeugen (16a,16b, 16c, 24, 116a, 116b, 124, 216a, 216b, 224) und dem Kontroller (28) ausschließlich durch die optische Faser erfolgt;
die Werkzeuge (16a,16b, 16c, 24, 116a, 116b, 124, 216a, 216b, 224) zum Senden und/oder Empfangen von optischen Daten eingerichtet sind;
der Downhole-Router (124) eine Verankerungsvorrichtung (54) zum Befestigen des trommelbaren Trägers umfasst;
das als Router (124) konfigurierbare Werkzeug einen Telemetrie-Verbinder (56) umfasst;
das als Router (124) konfigurierbare Werkzeug einen Signalmodulator (58) umfasst;
das als Router (124) konfigurierbare Werkzeug einen Repeater/Schalter/Router (60) umfasst;
das als Router (124) konfigurierbare Werkzeug eine Energiequelle (62) umfasst.

7. System nach einem der Ansprüche 5 oder 6, wobei zumindest eines der Folgenden gilt:
das System ferner ein Signalübertragungsglied zum Verbinden der Werkzeuge (16, 24, 116, 124, 216, 224) umfasst;
das Signalübertragungsglied ein Telemetrie-Crossover (36, 70) umfasst;
das Signalübertragungsglied ferner eine Energiequelle (62) umfasst;
das Signalübertragungsglied zumindest einen Sender (68) und einen Empfänger (68) umfasst, um eine drahtlose übertragung der Daten an das als Router (24, 124, 224) konfigurierbare Werkzeug zu erlauben und zum Umgeben des zumindest einen weiteren Werkzeugs (16, 116, 216);
wobei das Signalübertragungsglied ein Kabel zur übertragung von Daten an das als Router (124) konfigurierbare Werkzeug und zum Umgeben des zumindest einen weiteren Werkzeugs (16, 116, 216) umfasst.

8. System nach einem der Ansprüche 5 bis 7, wobei die Kommunikation zwischen den Werkzeugen (16, 24, 116, 124, 216, 224) und dem Kontroller (28) zum Teil durch die optische Faser und zum Teil durch zusätzliche Medien erfolgt;
und fakultativ wobei eines der Folgenden gilt:
die zusätzlichen Medien elektrische Signale umfassen;
die zusätzlichen Medien drahtlose Signale umfassen.

9. System nach einem der Ansprüche 5 bis 8, ferner umfassend einen elektro-optischen Umwandler (124, 224) zum Umwandeln elektrischer Signale aus den Werkzeugen (116, 124, 216, 224) in optische Signale zur übertragung an die Oberfläche durch die optische Faser und fakultativ, wobei zumindest eines der Folgenden gilt:
falls abhängig von Anspruch 7 oder 8, das System (10) so konfigurierbar ist, dass die Datenkommunikation zwischen den Werkzeugen (116, 124, 216, 224) und dem elektro-optischen Umwandler (124, 224) durch das Signalübertragungsglied übertragen wird;
die Kommunikation zwischen den Werkzeugen (116, 124, 216, 224) und dem elektro-optischen Umwandler (124, 224) mittels einer harten Verbindung erfolgt, oder wobei das System (10) so konfigurierbar ist, dass die Datenkommunikation zwischen den Werkzeugen (124, 224) und dem elektro-optischen Umwandler (124, 224) mittels einer drahtlosen Verbindung erfolgt.

10. System nach einem der Ansprüche 5 bis 9, wobei der Kontroller (28) eine Mehrzahl von separaten Elementen umfasst, und fakultativ wobei zumindest eines der folgenden gilt:
zumindest eines der Elemente des oberirdischen Kontrollers (28) entfernt angeordnet ist; und
zumindest eines der Elemente des oberirdischen Kontrollers (28) auf einem Bohrturm oder einem Lastkraftwagen angeordnet ist.

11. System nach einem der Ansprüche 5 bis 10, wobei der oberirdische Kontroller (28) zumindest ein nicht drehbares Element umfasst, um eine Datenkommunikation zwischen einer drehbaren Trommel und dem trommelbaren Träger (18, 118) zu ermöglichen, und fakultativ, zumindest eines der Folgenden:
das nicht drehbare Element einen Schleifring umfasst; die Kommunikation zwischen der drehbaren Trommel und dem trommelbaren Träger (18, 118) drahtlos erfolgt;
der Kontroller ferner Umwandler- und Senderelemente (68) umfasst, die der drehbaren Trommel zugeordnet sind und einen Empfänger umfasst, der dem nicht drehbaren Element zugeordnet ist.

12. System nach einem der Ansprüche 5 bis 11, wobei der oberirdische Kontroller einen innerhalb der Windetrommel (20) eingebauten Computer (28) umfasst, und fakultativ, wobei eines der folgenden gilt:
der oberirdische Computer-Kontroller (28) drahtlos mit einem Router (30) verbunden ist, der mit einem Computer (32) kommuniziert; und
der Computer (32) und der Router (30) verkabelt sind.

13. System nach einem der Ansprüche 6 bis 12, wobei zumindest eines der folgenden gilt:
die Energiequelle (62) eine Batterie (66) umfasst;
die Energiequelle (6) eine Turbine umfasst, die zur Erzeugung von Elektrizität aus einem durch das Bohrloch (12) strömenden Fluid konfigurierbar ist;
die Energiequelle einen Generator umfasst, der dafür eingerichtet ist, zumindest eines von LTmgebungsdruck, Wärme, und einer chemischen Reaktion mit Umgebungsfluiden auszunutzen um Elektrizität zu erzeugen.

14. System nach einem der Ansprüche 5 bis 13, wobei zumindest eines der Werkzeuge (16, 24, 116, 124, 216, 224) zumindest teilweise aus der Oberfläche angetrieben ist,
und fakultativ ferner elektrische Leistungskabel umfasst, um den Werkzeugen (16, 24, 116, 124, 216, 224) elektrische Energie zu liefern.

15. System nach einem der Ansprüche 5 bis 14, wobei zumindest eines der folgenden gilt:
die optische Leistung wird durch optische Fasern geliefert;
die Leistung wird durch Vibrationsenergie geliefert;
das System ferner eine drahtlose Energieversorgung umfasst;
das Werkzeug ein Endfertigungswerkzeug umfasst;
das Werkzeug ein Eingriffwerkzeug umfasst.

## Revendications

1. Procédé de communication avec un outil de fond de trou, le procédé comprenant les étapes consistant à :
attribuer des adresses uniques à une pluralité d'outils de fond de trou (16, 24, 116, 124, 216, 224), au moins un des outils (16, 24, 116, 124, 216, 224) étant configuré pour fonctionner en tant que routeur (24, 124, 224) ;
monter les outils (16, 24, 116, 124, 216, 224) sur un support enroulable (18, 118) comprenant une fibre optique et placer les outils (16, 24, 116, 124, 216, 224) dans un forage (12) ;
monter un dispositif de commande de surface (28) sur un treuil (20) associé au support enroulable (18, 118) ; et
transférer des données entre au moins un des outils (16, 116, 216) et le dispositif de commande de surface (28) via le routeur (24, 124, 224) et la fibre optique pendant un fonctionnement du treuil (20).

2. Procédé selon la revendication 1, comprenant au moins une étape parmi les étapes consistant à :
commander au moins un parmi l'outil (16, 116, 216) et le treuil (20) avec le dispositif de commande de surface (28) ;
attribuer une adresse unique au dispositif de commande de surface (28) ;
transférer les adresses uniques avec les données ;
communiquer les données en temps réel ;
pré-attribuer au moins une des adresses uniques ou attribuer au moins une des adresses uniques lorsque le système (10) est installé.

3. Procédé selon la revendication 1 ou 2, comprenant au moins un parmi :
l'adresse unique est une adresse de protocole Internet (IP) ;
le procédé comprend une étape consistant à configurer le dispositif de commande de surface (28) pour fournir une communication de données sécurisée avec au moins un des outils (16, 116, 216) ;
le procédé comprend une étape consistant à configurer le dispositif de commande de surface (28) pour fournir une re-communication de données sécurisée du dispositif de commande de surface (28) vers le propriétaire de l'outil ;
le procédé comprend une étape consistant à faire passer les outils (16, 24, 116, 124, 216, 224) dans le forage (12) sur le support enroulable (18, 118) ;
le support enroulable (18, 118) comprend un câble lisse ;
le treuil (20) comprend un treuil à câble lisse et le procédé comprend une étape consistant à monter le dispositif de commande de surface (28) sur le tambour de treuil (20) ;
le procédé comprend une étape consistant à transférer des données seulement via la fibre optique ;
l'outil configuré pour fonctionner en tant que routeur (24, 124, 224) transfère des données vers le au moins un autre outil (16, 116, 216) sans communiquer avec la surface ;
l'outil configuré pour fonctionner en tant que routeur (24, 124, 224) traite les données ;
au moins un des outils (16, 116, 216) et le dispositif de commande de surface (28) est au moins partiellement autoalimenté ; et
le procédé comprend une étape consistant à transférer des données pendant que les outils (16, 24, 116, 124, 216, 224) sont immobiles.

4. Procédé selon l'une quelconque des revendications précédentes, comprenant au moins un parmi :
le procédé comprend une étape consistant à raccorder les outils (16, 24, 116, 124, 216, 224) via un élément porteur de signal ;
l'élément porteur de signal comprend un outil d'intégration de télémesures (36, 70) ;
l'élément porteur de signal autorise des données à être transférées par liaison sans fil vers l'outil configuré pour fonctionner en tant que routeur (24, 124, 224) et contourner le au moins un autre outil (16, 116, 216) ;
l'élément porteur de signal autorise des données à être transférées par liaison sans fil vers l'outil configuré pour fonctionner en tant que routeur (24, 124, 224) et contourner le au moins un autre outil (16, 116, 216), ou l'élément porteur de signal comprend un câble permettant de transférer des données vers l'outil configuré pour fonctionner en tant que routeur (24, 124, 224) et contourner le au moins un autre outil (16, 116, 216).

5. Système de fond de trou (10) comprenant :
une pluralité d'outils de fond de trou (16a, 16b, 16c, 24, 116a, 116b, 124, 216a, 216b, 224) conçus pour se voir attribuer des adresses uniques, au moins un des outils (24, 124, 224) pouvant être configuré pour fonctionner en tant que routeur ;
un support enroulable (18, 118) comprenant une fibre optique ;
un dispositif de commande de surface (28) pouvant être monté sur un treuil (20) associé au support enroulable (18, 118) ;
un émetteur (68) associé à l'un des outils (16a, 16b, 16c, 24, 116a, 116b, 124, 216a, 216b, 224) et le dispositif de commande de surface (28) ; et
un récepteur associé à l'autre des outils (16a, 16b, 16c, 24, 116a, 116b, 124, 216a, 216b, 224) et le dispositif de commande de surface (28), grâce à quoi des données peuvent être transférées entre au moins un des outils (16a, 16b, 16c, 24, 116a, 116b, 124, 216a, 216b, 224) et le dispositif de commande de surface (28) via le routeur (24, 124, 224) et la fibre optique pendant un fonctionnant du treuil (20).

6. Système selon la revendication 5, comprenant au moins un parmi :
les données sont transférées via l'outil pouvant être configuré pour fonctionner en tant que routeur (24, 124, 224) et la fibre optique ;
au moins un parmi les outils (16a, 16b, 16c, 24, 116a, 116b, 124, 216a, 216b, 224) et le dispositif de commande de surface (28) comprend une source d'alimentation et est au moins partiellement autoalimenté ;
le support enroulable (18, 118) comprend un câble lisse ;
le treuil (20) comprend un treuil à câble lisse et le dispositif de commande de surface (28) est conçu pour être monté sur le tambour de treuil (20) ;
le dispositif de commande de surface (28) peut être configuré pour envoyer et/ou recevoir les données et traiter les données envoyées vers les outils (16a, 16b, 16c, 24, 116a, 116b, 124, 216a, 216b, 224) ou à partir de ceux-ci via la fibre optique (72) ;
le dispositif de commande de surface (28) peut être configuré pour commander un fonctionnement d'au moins un des outils (16a, 16b, 16c, 24, 116a, 116b, 124, 216a, 216b, 224) et du treuil (20) associé au support enroulable (18, 118) ;
le dispositif de commande de surface (28) est conçu pour se voir attribuer une adresse unique ;
les adresses uniques comprennent des adresses de protocole Internet ;
le système comprend un réseau à protocole Internet (IP) de fond de trou sécurisé ;
les outils (16a, 16b, 16c, 24, 116a, 116b, 124, 216a, 216b, 224) sont conçus pour être couplés à la fibre optique en parallèle ou en série ;
les outils (16a, 16b, 16c, 24, 116a, 116b, 124, 216a, 216b, 224) sont conçus pour être montés sur le support enroulable (18, 118) ;
les outils (16a, 16b, 16c, 24, 116a, 116b, 124, 216a, 216b, 224) sont couplés de manière physique ;
le système (10) peut être configuré de telle manière qu'une communication entre l'outil (16a, 16b, 16c, 24, 116a, 116b, 124, 216a, 216b, 224) et le dispositif de commande (28) est à sens unique ou bidirectionnel ;
la communication de données entre les outils (16a, 16b, 16c, 24, 116a, 116b, 124, 216a, 216b, 224) et le dispositif de commande (28) se fait seulement via la fibre optique ;
les outils (16a, 16b, 16c, 24, 116a, 116b, 124, 216a, 216b, 224) peuvent être configurés pour émettre et/ou recevoir des données optiques ;
le routeur de fond de trou (124) comprend un dispositif d'ancrage (54) permettant d'immobiliser le support enroulable ;
l'outil pouvant être configuré pour fonctionner en tant que routeur (124) comprend un connecteur de télémétrie (56) ;
l'outil pouvant être configuré pour fonctionner en tant que routeur (124) comprend un modulateur de signal (58) ;
l'outil pouvant être configuré pour fonctionner en tant que routeur (124) comprend un répéteur/un commutateur/un routeur (60) ;
l'outil pouvant être configuré pour fonctionner en tant que routeur (124) comprend une source d'alimentation (62).

7. Système selon la revendication 5 ou 6, comprenant au moins un parmi :
le système comprend en outre un élément porteur de signal permettant de raccorder les outils (16, 24, 116, 124, 216, 224) ;
l'élément porteur de signal comprend un outil d'intégration de télémesures (36, 70) ;
l'élément porteur de signal comprend en outre une source d'alimentation (62) ;
l'élément porteur de signal comprend au moins un parmi un émetteur (68) et un récepteur (68) afin de permettre une émission sans fil de données vers l'outil conçu pour fonctionner en tant que routeur (24, 124, 224) et contourner le au moins un autre outil (16, 116,216) ;
dans lequel l'élément porteur de signal comprend un câble permettant de transférer des données vers l'outil conçu pour fonctionner en tant que routeur (24, 124, 224) et contourner le au moins un autre outil (16, 116, 216).

8. Système selon l'une quelconque des revendications 5 à 7, dans lequel la communication entre les outils (16, 24, 116, 124, 216, 224) et le dispositif de commande (28) se fait partiellement via la fibre optique et partiellement via un support supplémentaire ;
et comprenant éventuellement au moins un parmi :
le support supplémentaire comprend des signaux électriques ;
le support supplémentaire comprend des signaux sans fil.

9. Système selon l'une quelconque des revendications 5 à 8, comprenant en outre un convertisseur électro-optique (124, 224) permettant de convertir des signaux électriques provenant des outils (116, 124, 216, 224) en signaux optiques en vue d'une émission vers la surface par l'intermédiaire de la fibre optique, et comprenant éventuellement au moins un parmi :
lorsqu'il est dépendant de la revendication 7 ou 8, le système (10) peut être configuré de telle manière que la communication de données entre les outils (116, 124, 216, 224) et le convertisseur électro-optique (124, 224) est transférée via l'élément porteur de signal ;
la communication entre les outils (116, 124, 216, 224) et le convertisseur électro-optique (124, 224) se fait via une liaison physique, ou le système (10) peut être configuré de telle manière que la communication de données entre les outils (124, 224) et le convertisseur électro-optique (124, 224) se fait via une liaison sans fil.

10. Système selon l'une quelconque des revendications 5 à 9, dans lequel le dispositif de commande (28) comprend une pluralité d'éléments séparés, et comprenant éventuellement au moins un parmi :
au moins un des éléments de dispositif de commande de surface (28) est situé à distance ; et
au moins un des éléments de dispositif de commande de surface (28) est fourni sur une installation de forage ou un camion.

11. Système selon l'une quelconque des revendications 5 à 10, dans lequel le dispositif de commande de surface (28) comprend au moins un élément non rotatif permettant de fournir une communication de données entre un touret rotatif et le support enroulable (18, 118), et éventuellement au moins un parmi :
l'élément non rotatif comprend une bague collectrice ; une communication entre le touret rotatif et le support enroulable (18, 118) est fournie par liaison sans fil ;
le dispositif de commande comprend en outre des éléments de conversion et d'émission (68) fournis en association avec le touret rotatif et un récepteur fourni en association avec l'élément non rotatif du dispositif de commande.

12. Système selon l'une quelconque des revendications 5 à 11, dans lequel le dispositif de commande de surface comprend un ordinateur (28) monté à l'intérieur du tambour de treuil (20), et comprenant éventuellement au moins un parmi :
l'ordinateur de dispositif de commande de surface (28) est relié sans fil à un routeur (30) en communication avec un ordinateur (32) ; et
l'ordinateur (32) et le routeur (30) sont câblés de manière physique.

13. Système selon l'une quelconque des revendications 6 à 12, comprenant au moins un parmi :
la source d'alimentation (62) comprend une batterie (66) ;
la source d'alimentation (62) comprend une turbine pouvant être configurée pour générer de l'électricité à partir d'un fluide circulant à travers le forage (12) ;
la source d'alimentation comprend un générateur conçu pour utiliser au moins une parmi une pression ambiante, de la chaleur, et une réaction chimique avec des fluides ambiants afin de produire de l'électricité.

14. Système selon l'une quelconque des revendications 5 à 13, dans lequel au moins un des outils (16, 24, 116, 124, 216, 224) est au moins partiellement alimenté depuis la surface, et
et éventuellement comprenant en outre un câblage d'alimentation électrique permettant de fournir de l'énergie audit outil (16, 24, 116, 124, 216, 224).

15. Système selon l'une quelconque des revendications 5 à 14, comprenant au moins un parmi :
l'énergie optique est fournie via la fibre optique ;
l'énergie est fournie grâce à une énergie des vibrations ;
le système comprend en outre une alimentation électrique sans fil ;
l'outil comprend un outil de conditionnement de puits ;
l'outil comprend un outil d'intervention.
